# NEUE EUROPÄISCHE PATENTSCHRIFT

(11) **EP 3 717 726 B2**
(45) Veröffentlichungstag und Bekanntmachung des Hinweises auf die Entscheidung über den Einspruch: **19.08.2026**
(45) Hinweis auf die Patenterteilung: 08.11.2023
(21) Anmeldenummer: 18807931.3
(22) Anmeldetag: 20.11.2018
(51) Int. Cl.: E05F 15/622

(54) **SPINDELANTRIEBSBAUGRUPPE SOWIE FAHRZEUGKLAPPE MIT EINER SPINDELANTRIEBSBAUGRUPPE**
SPINDLE DRIVE ASSEMBLY AND VEHICLE FLAP WITH A SPINDLE DRIVE ASSEMBLY
MODULE D'ENTRAÎNEMENT À VIS ET OUVRANT DE VÉHICULE DOTÉ D'UN MODULE D'ENTRAÎNEMENT À VIS

(30) Priorität: 30.11.2017 DE 102017128391
(43) Veröffentlichungstag der Anmeldung: 07.10.2020
(73) Patentinhaber: Minebea AccessSolutions Deutschland GmbH, 85253 Erdweg (DE)
(72) Erfinder: KUMMER, Frank, 85253 Erdweg (DE); BITTNER, Eric, 85253 Erdweg (DE); LEJEUNE, Nicolas, 85253 Erdweg (DE)
(74) Vertreter: Prinz & Partner mbB
(86) Internationale Anmeldenummer: PCT/EP2018/081966
(87) Internationale Veröffentlichungsnummer: WO 2019/105810

(56) Entgegenhaltungen:
- CN-A- 105 019 766
- CN-A- 106 761 141
- CN-U- 204 827 001
- CN-U- 206 309 194
- DE-A1- 102008 061 117
- DE-A1- 102008 062 400
- DE-A1- 102011 082 540
- DE-A1- 102014 109 460
- DE-A1- 3 733 781
- US-A- 3 751 998
- US-A1- 2015 333 591
- US-A1- 2017 191 553

## Beschreibung

Die Erfindung betrifft eine Spindelantriebsbaugruppe zum Öffnen und/oder Schließen einer Fahrzeugklappe gemäß dem Oberbegriff des Anspruchs 1.

Ferner betrifft die Erfindung eine Fahrzeugklappe, insbesondere eine Fahrzeugheckklappe oder einen Fahrzeugkofferraumdeckel, mit einer solchen Spindelantriebsbaugruppe.

Fahrzeugklappen sowie Spindelantriebsbaugruppen der eingangs genannten Art sind aus dem Stand der Technik bekannt.

Beispielsweise zeigt die US 2015/333591 A1 eine Spindelantriebsbaugruppe der eingangs genannten Art.

Ferner ist aus der DE 10 2014 109 460 A1 eine Spindelantriebsbaugruppe bekannt geworden, bei der ein Antriebsmotor über eine Adapteranordnung in einem Spindelantriebsgehäuse gelagert ist.

Die bekannten Spindelantriebsbaugruppen umfassen in der Regel einen elektrischen Spindelantrieb, mittels dem die zugeordnete Fahrzeugklappe geöffnet und/oder geschlossen werden kann. Ein Nutzer eines zugehörigen Fahrzeugs muss also das Öffnen und/oder Schließen nicht mehr manuell vornehmen. Er muss lediglich einen Befehl zum Öffnen oder Schließen an die Spindelantriebsbaugruppe absenden, was er beispielsweise über eine Funkfernbedienung oder über einen im Fahrzeug angeordneten Schalter tun kann. Auch kann ein fahrzeugaußenseitig angeordneter Fußschalter verwendet werden, der berührungslos arbeiten kann.

Solche Spindelantriebsbaugruppen müssen eine große Vielzahl an Öffnungsund/oder Schließbewegungen zuverlässig ausführen können. Gleichzeitig wird im Bereich der Spindelantriebsbaugruppen stets angestrebt, diese möglichst einfach aufzubauen, wodurch eine kostengünstige Herstellung gewährleistet sein soll. Zwischen diesen Anforderungen besteht offensichtlich ein Zielkonflikt, sodass bekannte Spindelantriebsbaugruppen, die in besonderem Maße zuverlässig sind, üblicherweise nicht besonders kostengünstig herstellbar sind und umgekehrt.

Die Aufgabe der Erfindung ist es, diesen Zielkonflikt zu überwinden und eine Spindelantriebsbaugruppe anzugeben, die sowohl einfach und kostengünstig herzustellen ist, als auch besonders zuverlässig arbeitet.

Die Aufgabe wird durch eine Spindelantriebsbaugruppe gemäß Anspruch 1 gelöst. Diese formschlüssige Lagerung dient unter anderem dazu, das Antriebsmoment des Spindelantriebsmotors im Spindelantriebsbaugruppengehäuse abzustützen. Formschlusselemente lassen sich dabei am Spindelantriebsmotor und am Spindelantriebsbaugruppengehäuse besonders einfach und aufwandsarm herstellen, sodass die Spindelantriebsbaugruppe insgesamt vergleichsweise einfach und aufwandsarm hergestellt werden kann. Zudem wirkt ein Formschluss besonders zuverlässig. Insbesondere unterliegt er keinen Alterungs- oder Lockerungserscheinungen, wie beispielsweise ein Kraftschluss. Somit ist eine hohe Lebensdauer der Spindelantriebsbaugruppe gewährleistet.

Erfindungsgemäß umfasst zudem das Spindelantriebsbaugruppengehäuse eine Gehäusekappe und der Spindelantriebsmotor ist rotationsfest an der Gehäusekappe gelagert. Die Gehäusekappe, die ein Bestandteil des Spindelantriebsbaugruppengehäuses ist, ist dabei insbesondere rotationsfest mit einem Gehäusekörper verbunden. Beispielsweise ist die Gehäusekappe mit dem Gehäusekörper laserverschweißt. Es ist also auch in dieser Ausführungsform eine zuverlässige Lagerung des Spindelantriebsmotors gewährleistet. Somit lässt sich die Spindelantriebsbaugruppe zuverlässig betreiben. Hinzu kommt, dass die Gehäusekappe in der Regel verhältnismäßig frei gestaltet werden kann, sodass ein gehäusekappenseitiges Formschlusselement besonders einfach und kostengünstig realisiert werden kann.

Vorzugsweise schließt die Gehäusekappe das Spindelantriebsbaugruppengehäuse axial endseitig ab. Insbesondere ist so ein wasser- und staubdichtes Spindelantriebsbaugruppengehäuse gegeben. Dieses schützt die Komponenten der Spindelantriebsbaugruppe besonders wirkungsvoll gegen unerwünschte Umwelteinflüsse.

Der Spindelantriebsmotor kann über mindestens ein Dämpfungselement im Spindelantriebsbaugruppengehäuse gelagert sein. Vom Spindelantriebsmotor ausgehende Schwingungen können somit wirkungsvoll gedämpft werden, bevor sie ins Spindelantriebsbaugruppengehäuse eingeleitet werden. Mit anderen Worten ist der Spindelantriebsmotor vom Spindelantriebsbaugruppengehäuse schwingungsentkoppelt. Das Spindelantriebsbaugruppengehäuse ist daher im Betrieb der Spindelantriebsbaugruppe insbesondere frei von Vibrationen oder weist nur geringe Vibrationen auf. Zudem wird durch die Dämpfungselemente eine Geräuschabstrahlung des Spindelantriebsmotors verringert oder verhindert. Es resultiert eine besonders leise und vibrationsarm betreibbare Spindelantriebsbaugruppe. Eine solche wird als qualitativ hochwertig empfunden. Zudem arbeitet sie zuverlässig.

In einer Variante ist der Spindelantriebsmotor über ein Motorgehäuse im Spindelantriebsbaugruppengehäuse gelagert. Das spindelantriebsmotorseitige Formschlusselement ist also am Motorgehäuse, genauer gesagt an einem Bürstengehäuse des Spindelantriebsmotors, vorgesehen. Dort kann ein solches Formschlusselement aufwandsarm hergestellt werden. Auch ist so eine wirkungsvolle Drehmomentabstützung gewährleistet. Gleiches gilt für die Befestigung des Spindelantriebsmotors im Spindelantriebsbaugruppengehäuse.

In diesem Zusammenhang können am Motorgehäuse mindestens zwei Antirotationsvorsprünge vorgesehen sein, die sich im montierten Zustand des Spindelantriebsmotors im Wesentlichen entlang der Spindelantriebsachse erstrecken und in zugeordnete, am Spindelantriebsbaugruppengehäuse vorgesehene Vertiefungen eingreifen. Die Antirotationsvorsprünge weisen gegenüber der Spindelantriebsachse einen Abstand größer null auf. Vorsprünge und Vertiefungen lassen sich einfach und kostengünstig herstellen.

Das Motorgehäuse ist vorzugsweise aus Kunststoff hergestellt.

Bevorzugt sind die Antirotationsvorsprünge kreiszylinderförmig, wobei im montierten Zustand des Spindelantriebsmotors zugeordnete Kreiszylindermittelachsen im Wesentlichen parallel zur Spindelantriebsachse verlaufen. Solche Antirotationsvorsprünge lassen sich besonders einfach herstellen. Zudem sind sie im Rahmen der Montage einfach in zugeordnete Vertiefungen einführbar.

Die Antirotationsvorsprünge können über elastische, auf den Antirotationsvorsprüngen angeordnete Dämpfungskappen oder über elastische, in den Vertiefungen angeordnete Dämpfungselemente in die Vertiefungen eingreifen. Damit wird eine Schwingungsentkopplung oder zumindest eine Schwingungsdämpfung zwischen dem Spindelantriebsmotor und dem Spindelantriebsbaugruppengehäuse erreicht. Die Dämpfungselemente weisen eine besonders einfache Geometrie auf.

Bevorzugt sind die Dämpfungselemente aus einem Elastomer hergestellt.

In einer Variante sind die Antirotationsvorsprünge an einer axialen Endseite des Spindelantriebsmotors vorgesehen, die der Motorwelle abgewandt ist. Mit anderen Worten sind die Antirotationsvorsprünge auf der Rückseite des Spindelantriebsmotors vorgesehen. Es wird somit eine wechselseitige Störung der rotationsfesten Lagerung des Spindelantriebsmotors und der Drehmomentabnahme von der Motorwelle des Spindelantriebsmotors wirkungsvoll vermieden.

Zudem kann bzw. können ein erster elektrischer Leistungsanschluss des Spindelantriebsmotors und/oder ein zweiter elektrischer Leistungsanschluss des Spindelantriebsmotors und/oder ein Sensoranschluss des Spindelantriebsmotors an einer axialen Endseite des Spindelantriebsmotors vorgesehen sein, die der Motorwelle abgewandt ist. Nachdem die Antirotationsvorsprünge vergleichsweise klein gestaltet werden können, bleibt ein ausreichend großer Bauraum für Leistungsanschlüsse und/oder Sensoranschlüsse frei. Damit kann der Spindelantriebsmotor verhältnismäßig kompakt gebaut werden. Durch die Anordnung der Anschlüsse an der axialen Endseite sind diese besonders gut zugänglich, insbesondere im Rahmen der Montage.

Ferner wird die Aufgabe durch eine Fahrzeugklappe der eingangs genannten Art, insbesondere eine Fahrzeugheckklappe oder einen Fahrzeugkofferraumdeckel, mit einer erfindungsgemäßen Spindelantriebsbaugruppe gelöst. Nachdem die Spindelantriebsbaugruppe einfach und kostengünstig aufgebaut ist, ist folglich auch eine mit dieser ausgestattete Fahrzeugklappe vergleichsweise einfach und kostengünstig aufgebaut. Darüber hinaus ist eine solche Fahrzeugklappe besonders zuverlässig im Betrieb.

Neben den vorgenannten Fahrzeugklappen können auch Gepäck- oder Ladeklappen von Freizeit- oder Nutzfahrzeugen mit einer erfindungsgemäßen Spindelantriebsbaugruppe ausgestattet sein. Gleiches gilt für Motorhauben und Fahrzeugfrontklappen.

Die Erfindung wird nachstehend anhand eines Ausführungsbeispiels erläutert, das in den beigefügten Zeichnungen gezeigt ist. Es zeigen:
- Figur 1 schematisch eine erfindungsgemäße Fahrzeugklappe mit einer erfindungsgemäßen Spindelantriebsbaugruppe, die mittels eines erfindungsgemäßen Verfahrens montiert ist,
- Figur 2 die Spindelantriebsbaugruppe aus Figur 1 in einer schematischen Schnittansicht,
- Figur 3 die Spindelantriebsbaugruppe aus Figur 1 in einer Explosionsdarstellung,
- Figur 4 die Spindelantriebsbaugruppe aus Figur 1 in einer geschnittenen Detailansicht,
- Figur 5 einen Spindelantriebsmotor der Spindelantriebsbaugruppe aus Figur 1 in einer perspektivischen Ansicht,
- Figur 6 schematisch das Zusammenwirken des Spindelantriebsmotors aus Figur 5 mit einem Spindelantriebsbaugruppengehäuse in einer teilweise geschnittenen Darstellung,
- Figur 7 schematisch eine endseitige Ansicht des Spindelantriebsmotors aus den Figuren 5 und 6 sowie einer mit dem Spindelantriebsmotor verbindbaren Gehäusekappe,
- Figur 8 eine Explosionsdarstellung eines zweistufigen Umlaufrädergetriebes der Spindelantriebsbaugruppe aus Figur 1, das mittels eines erfindungsgemäßen Verfahrens montierbar ist,
- Figur 9 eine weitere Explosionsdarstellung des zweistufigen Umlaufrädergetriebes der Spindelantriebsbaugruppe aus Figur 1, wobei das Umlaufrädergetriebe teilweise mittels eines erfindungsgemäßen Verfahrens montiert ist,
- Figur 10 eine ein zweistufiges Umlaufrädergetriebe, eine Kupplung, eine Hysteresebremse und einen Spindelantriebsmotor umfassende Explosionsdarstellung der Spindelantriebsbaugruppe aus Figur 1,
- Figur 11 eine Spindeleinheit der Spindelantriebsbaugruppe aus Figur 1 in einer Explosionsdarstellung,
- Figur 12 ein Detail der Spindeleinheit aus Figur 11,
- Figur 13 ein Detail der Spindelantriebsbaugruppe aus Figur 1 in einer Schnittdarstellung und
- Figur 14 ein weiteres Detail der Spindelantriebsbaugruppe aus Figur 1 in einer Schnittdarstellung.

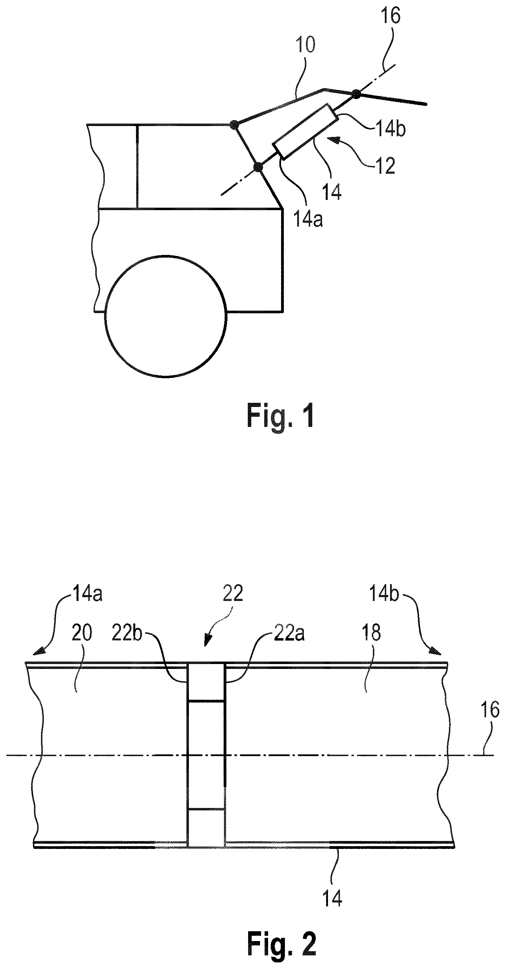

Figur 1 zeigt eine Fahrzeugklappe 10, die vorliegend eine Fahrzeugheckklappe ist, mit einer Spindelantriebsbaugruppe 12, mittels der die Fahrzeugklappe 10 geöffnet und/oder geschlossen werden kann.

Die Spindelantriebsbaugruppe 12 umfasst ein Spindelantriebsbaugruppengehäuse 14, das sich entlang einer Spindelantriebsachse 16 erstreckt.

Wie insbesondere anhand von Figur 2 zu sehen ist, sind im Spindelantriebsbaugruppengehäuse 14 eine in Figur 2 lediglich schematisch dargestellte Motorgetriebeeinheit 18 sowie eine ebenfalls in Figur 2 nur schematisch dargestellte Spindeleinheit 20 angeordnet.

Dabei umfasst das Spindelantriebsbaugruppengehäuse 14 zwischen seinen axialen Enden 14a, 14b einen axial beidseitig wirkenden Anschlagsabschnitt 22.

Die Motorgetriebeeinheit 18 ist auf einer ersten axialen Seite 22a des Anschlagsabschnitts 22 angeordnet und die Spindeleinheit 20 auf einer zweiten, der ersten axialen Seite 22a entgegengesetzten axialen Seite 22b.

Sowohl die Motorgetriebeeinheit 18 als auch die Spindeleinheit 20 liegen am Anschlagsabschnitt 22 an.

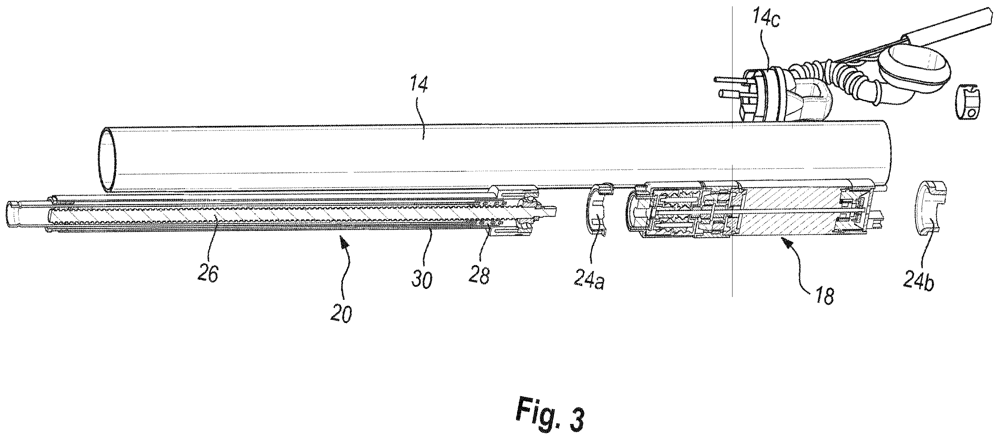

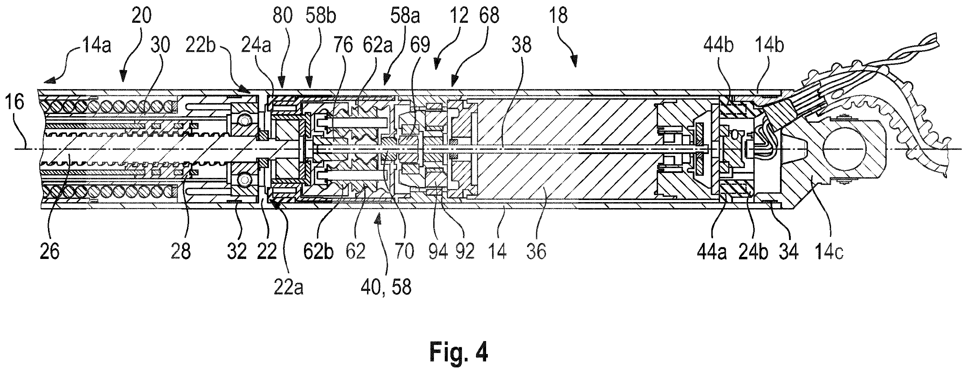

In der dargestellten Ausführungsform (siehe insbesondere die Figuren 3 und 4) ist die Motorgetriebeeinheit 18 über zwei Dämpfungselemente 24a, 24b, die aus einem Elastomer hergestellt sind, im Spindelantriebsbaugruppengehäuse 14 gelagert.

Die Spindeleinheit 20 umfasst neben einer Spindel 26 und einer mit dieser gekoppelten Spindelmutter 28 ein Führungsrohr 30.

In der dargestellten Ausführungsform ist das Führungsrohr 30 am Spindelantriebsbaugruppengehäuse 14 befestigt. Genauer gesagt, ist das Führungsrohr 30 mit dem Spindelantriebsbaugruppengehäuse 14 laserverschweißt. Die Laserschweißnaht 32 ist dabei lediglich schematisch eingezeichnet.

Der Anschlagsabschnitt 22 ist einstückig mit dem Spindelantriebsbaugruppengehäuse 14 produziert.

Dabei ist das Spindelantriebsbaugruppengehäuse 14 aus einem Kunststoff hergestellt.

Vorliegend ist der Anschlagsabschnitt 22 mittels Spritzgießen des Spindelantriebsbaugruppengehäuses 14 hergestellt.

Das Spindelantriebsbaugruppengehäuse 14 umfasst zusätzlich eine Gehäusekappe 14c. Diese schließt das Spindelantriebsbaugruppengehäuse 14 motorgetriebeeinheitsseitig ab.

Die Gehäusekappe 14c und das Spindelantriebsbaugruppengehäuse 14 sind laserverschweißt. Die Laserschweißnaht 34 ist dabei wieder nur schematisch eingezeichnet.

Die Montage der Spindelantriebsbaugruppe 12 läuft folgendermaßen ab.

Zunächst wird das Spindelantriebsbaugruppengehäuse 14 bereitgestellt.

Dann wird die Motorgetriebeeinheit 18 ausgehend von einer ersten axialen Seite des Spindelantriebsbaugruppengehäuses 14, auf der im gezeigten Beispiel das axiale Ende 14b angeordnet ist, in das Spindelantriebsbaugruppengehäuse 14 eingesetzt.

Dabei wird die Motorgetriebeeinheit 18 an die erste axiale Seite 22a des Anschlagsabschnitts 22 angelegt.

Die Spindeleinheit 20 wird von einer der ersten axialen Seite des Spindelantriebsbaugruppengehäuses 14 entgegengesetzten, zweiten axialen Seite 22b des Spindelantriebsbaugruppengehäuses 14 in dieses eingesetzt. In der dargestellten Ausführungsform ist auf dieser Seite das axiale Ende 14a angeordnet.

Die Spindeleinheit 20 wird an die zweite axiale Seite 22b des Anschlagsabschnitts 22 angelegt.

Ob zuerst die Motorgetriebeeinheit 18 oder zuerst die Spindeleinheit 20 am Spindelantriebsbaugruppengehäuse 14 montiert wird, ist für das Montageverfahren unerheblich. Es können auch die Motorgetriebeeinheit 18 und die Spindeleinheit 20 im Wesentlichen gleichzeitig montiert werden.

Wenn die Spindeleinheit 20 im Spindelantriebsbaugruppengehäuse 14 eingesetzt ist, wird diese darin befestigt. In der dargestellten Ausführungsform umfasst die Spindeleinheit 20 ein Führungsrohr 30, das mittels der Laserschweißnaht 32 am Spindelantriebsbaugruppengehäuse 14 befestigt wird.

Das Spindelantriebsbaugruppengehäuse 14 und das Führungsrohr 30 werden also laserverschweißt.

Nachfolgend wird das Spindelantriebsbaugruppengehäuse 14 am Ende 14b mittels einer Gehäusekappe 14c abgeschlossen. In diesem Zusammenhang wird das Spindelantriebsbaugruppengehäuse 14 mit der Gehäusekappe 14c laserverschweißt.

Die Motorgetriebeeinheit 18 umfasst einen Spindelantriebsmotor 36, der über eine Motorwelle 38 mit einem Getriebe 40 gekoppelt ist.

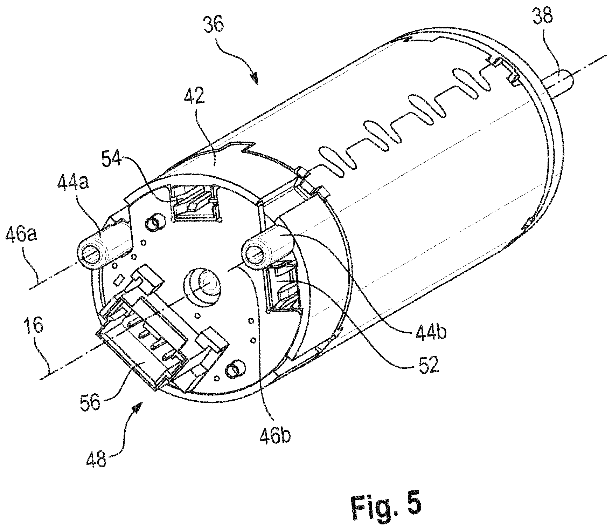

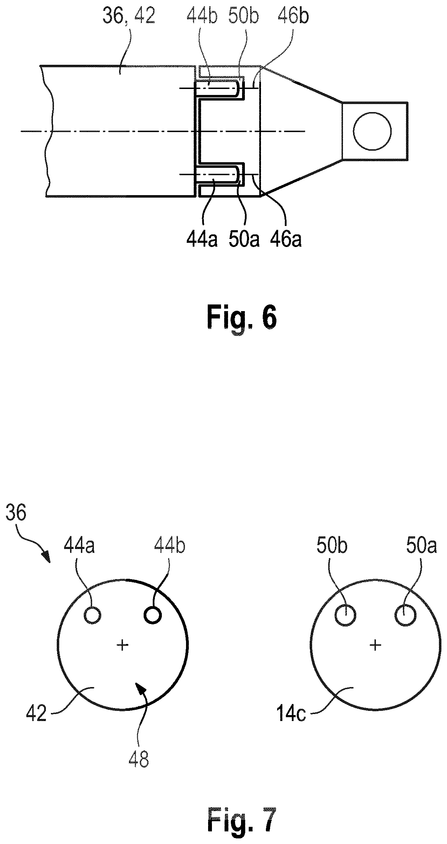

Die Figuren 5 - 7 zeigen den Spindelantriebsmotor 36 im Detail.

Nachdem die Motorgetriebeeinheit 18 im Spindelantriebsbaugruppengehäuse 14 angeordnet ist, ist auch der Spindelantriebsmotor 36 im Spindelantriebsbaugruppengehäuse 14 positioniert. Die Motorwelle 38 ist dabei im Wesentlichen koaxial zur Spindelantriebsachse 16.

Der Spindelantriebsmotor 36 und damit die Motorgetriebeeinheit 18 sind zudem über einen Formschluss bezüglich der Spindelantriebsachse 16 rotationsfest im Spindelantriebsbaugruppengehäuse 14 gelagert.

Genauer gesagt, ist der Spindelantriebsmotor 36 rotationsfest über einen Formschluss an der Gehäusekappe 14c gelagert, die ein Bestandteil des Spindelantriebsbaugruppengehäuses 14 ist.

Die rotationsfeste Lagerung erfolgt dabei über ein Motorgehäuse 42 des Spindelantriebsmotors 36.

An diesem sind in der dargestellten Ausführungsform zwei Antirotationsvorsprünge 44a, 44b vorgesehen, die sich im montierten Zustand des Spindelantriebsmotors 36 und damit auch der Motorgetriebeeinheit 18 im Wesentlichen entlang der Spindelantriebsachse 16 erstrecken.

Vorliegend sind die Antirotationsvorsprünge 44a, 44b kreiszylinderförmig, wobei im montierten Zustand des Spindelantriebsmotors 36 die zugeordneten Kreiszylindermittelachsen 46a, 46b im Wesentlichen parallel zur Spindelantriebsachse 16 verlaufen.

Die Antirotationsvorsprünge 44a, 44b sind an einer axialen Endseite 48 des Spindelantriebsmotors 36 vorgesehen, die der Motorwelle 38 abgewandt ist. Im montierten Zustand liegen die Antirotationsvorsprünge 44a, 44b also auf einer dem Getriebe 40 entgegengesetzten Seite des Spindelantriebsmotors 36.

Die Antirotationsvorsprünge 44a, 44b greifen im montierten Zustand in zugeordnete, am Spindelantriebsbaugruppengehäuse 14 vorgesehene Vertiefungen 50a, 50b ein. In der dargestellten Ausführungsform sind die Vertiefungen 50a, 50b an der Gehäusekappe 14c vorgesehen.

Genauer gesagt, sind in der dargestellten Ausführungsform die Vertiefungen 50a, 50b am Dämpfungselement 24b vorgesehen, das drehfest mit der Gehäusekappe 14c verbunden ist.

Die Antirotationsvorsprünge 44a, 44b können alternativ über elastische, auf den Antirotationsvorsprüngen 44a, 44b angeordnete Dämpfungskappen oder über elastische, in den Vertiefungen 50a, 50b angeordnete Dämpfungselemente in die Vertiefungen 50a, 50b eingreifen.

Wie insbesondere anhand Figur 5 zu erkennen ist, sind in der dargestellten Ausführungsform neben den Antirotationsvorsprüngen 44a, 44b zusätzlich ein erster elektrischer Leistungsanschluss 52, ein zweiter elektrischer Leistungsanschluss 54 sowie ein Sensoranschluss 56 an der axialen Endseite 48 des Spindelantriebsmotors 36 vorgesehen.

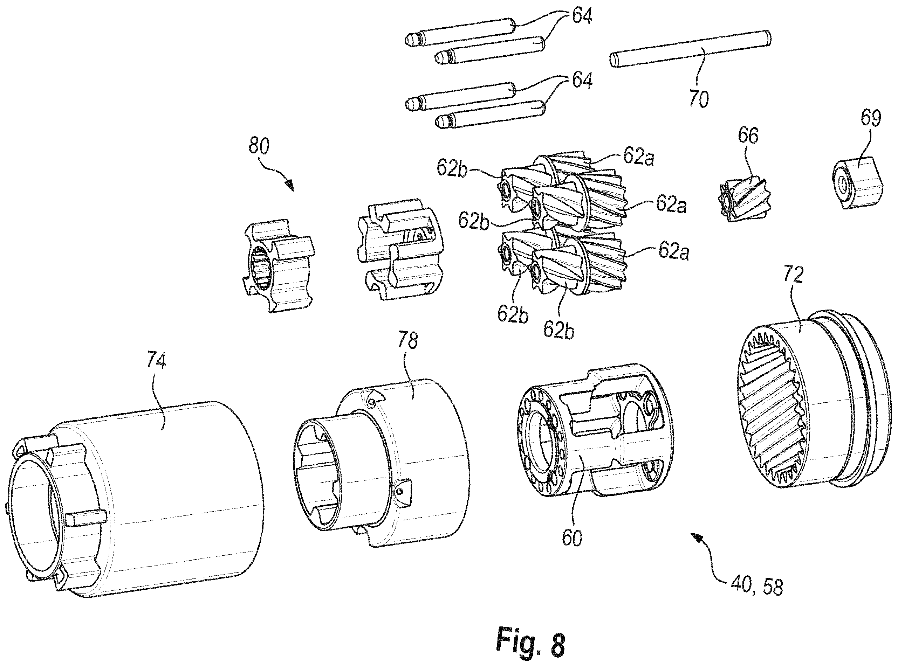

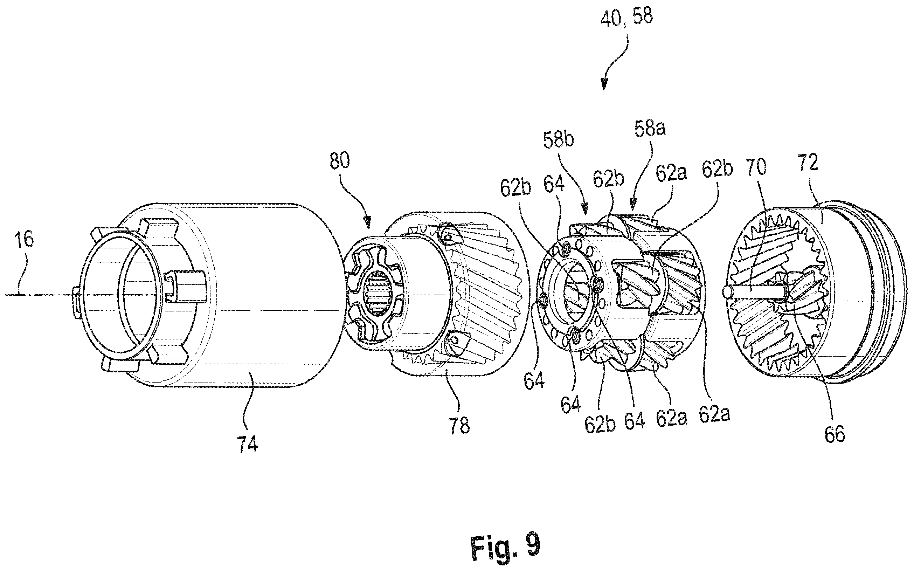

In den Figuren 8 und 9 ist das Getriebe 40 im Detail zu sehen.

Dabei ist zu erkennen, dass das Getriebe 40 ein zweistufiges Umlaufrädergetriebe 58 ist.

In diesem Zusammenhang umfasst es eine erste Umlaufrädergetriebestufe 58a, die auch als motorseitige oder antriebsseitige Umlaufrädergetriebestufe 58a bezeichnet wird, und eine zweite Umlaufrädergetriebestufe 58b, die auch als spindelseitige oder abtriebsseitige Umlaufrädergetriebestufe 58b bezeichnet wird.

Das Umlaufrädergetriebe 58 ist spiralverzahnt. Beide Umlaufrädergetriebestufen 58a, 58b weisen dabei gleichsinnige Spiralverzahnungen auf.

Zudem umfasst das zweistufige Umlaufrädergetriebe 58 lediglich einen einzigen, singulären Planetenträger 60. Dieser gehört also zu beiden Umlaufrädergetriebestufen 58a, 58b.

Darüber hinaus umfassen sowohl die motorseitige Umlaufrädergetriebestufe 58a als auch die spindelseitige Umlaufrädergetriebestufe 58b eine gleiche Anzahl an Planetenrädern 62a, 62b. Im dargestellten Ausführungsbeispiel umfasst jede der Umlaufrädergetriebestufen 58a, 58b vier Planetenräder 62a, 62b.

Dabei sind jeweils ein Planetenrad 62a der ersten Umlaufrädergetriebestufe 58a und ein Planetenrad 62b der zweiten Umlaufrädergetriebestufe 58b auf einer gemeinsamen Planetenradachse 64 gelagert.

Die auf einer gemeinsamen Planetenradachse 64 gelagerten Planetenräder 62a, 62b sind drehfest miteinander verbunden.

Das Umlaufrädergetriebe 58 funktioniert folgendermaßen.

Die Motorwelle 38 ist mit einem Sonnenrad 66 der motorseitigen Umlaufrädergetriebestufe 58a drehgekoppelt. Somit stellt das Sonnenrad 66 den Antrieb oder den Drehmomenteingang des Umlaufrädergetriebes 58 dar.

Nachdem diese Kopplung über eine Kupplung 68 erfolgt, ist streng genommen eine Getriebeeingangswelle 70 mit dem Sonnenrad 66 gekoppelt. Diese kann jedoch als Fortsetzung der Motorwelle 38 angesehen werden.

Die Kupplung 68 ist in der dargestellten Ausführungsform eine Oldhamkupplung zum Ausgleich von Achsversatz. In Figur 8 ist dabei lediglich ein getriebeseitiges Kupplungsteil 69 zu sehen, das mit der Getriebeeingangswelle 70 verbunden ist.

Das Sonnenrad 66 wirkt mit den Planetenrädern 62a der motorseitigen Umlaufrädergetriebestufe 58a zusammen, die wiederum mit einem Hohlrad 72 der motorseitigen Umlaufrädergetriebestufe 58a gekoppelt sind.

Das Hohlrad 72 ist drehfest und axialfest in dem Spindelantriebsbaugruppengehäuse 14 und/oder in einem Umlaufrädergetriebegehäuse 74 gelagert. Das Hohlrad 72 steht also im Wesentlichen fest im Raum.

Die motorseitige Umlaufrädergetriebestufe 58a ist mit der spindelseitigen Umlaufrädergetriebestufe 58b sowohl über den singulären Planetenträger 60 als auch über die einstückigen Planetenräder 62a, 62b gekoppelt.

Dabei ist die spindelseitige Umlaufrädergetriebestufe 58b sonnenradfrei ausgeführt.

Die Planetenräder 62b der spindelseitigen Umlaufrädergetriebestufe 58b sind lediglich radial auf einem axialen Lagerfortsatz 76 der Sonnenradwelle der motorseitigen Umlaufrädergetriebestufe 58a gelagert. Die Sonnenradwelle entspricht dabei der Getriebeeingangswelle 70.

Die Planetenräder 62b der spindelseitigen Umlaufrädergetriebestufe 58b sind ferner mit einem Hohlrad 78 der spindelseitigen Umlaufrädergetriebestufe 58b gekoppelt.

Dieses Hohlrad 78 ist über eine Kupplung 80 mit der Spindel 26 drehgekoppelt. Dabei ist das Hohlrad 78 im Spindelantriebsbaugruppengehäuse 14 und/oder im Umlaufrädergetriebegehäuse 74 drehbar gelagert.

Das Hohlrad 78 stellt also den Abtrieb oder den Drehmomentausgang des Umlaufrädergetriebes 58 dar.

Das Umlaufrädergetriebe 58 kann folgendermaßen montiert werden.

Zunächst werden alle Planetenräder 62a, 62b der beiden Umlaufrädergetriebestufen 58a, 58b im singulären Planetenträger 60 montiert.

Anschließend wird der Planetenträger 60 in das Hohlrad 72 der antriebsseitigen Umlaufrädergetriebestufe 58a oder in das Hohlrad 78 der abtriebsseitigen Umlaufrädergetriebestufe 58b eingesetzt.

Danach wird das jeweils andere Hohlrad, also das Hohlrad 78 oder das Hohlrad 72, auf diesen Verbund aufgesetzt.

Sodann wird das Umlaufrädergetriebegehäuse 74 bereitgestellt und mit dem Hohlrad 72 verbunden.

In der dargestellten Ausführungsform wird das Umlaufrädergetriebegehäuse 74 mit dem Hohlrad 72 in einem Überlappstoß laserverschweißt. Dafür ist das Umlaufrädergetriebegehäuse 74 laserlichtdurchlässig.

Damit die Spindelantriebsbaugruppe 12 im Betrieb Geräusche emittiert, die von einem Kraftfahrzeugnutzer als angenehm empfunden werden, ist der Verhältnis der Zähnezahl jedes der Planetenräder 62a der ersten Umlaufrädergetriebestufe 58a und der Zähnezahl jedes der Planetenräder 62b der zweiten Umlaufrädergetriebestufe 58b zu 2:1 gewählt.

In der dargestellten Ausführungsform umfasst jedes Planetenrad 62a der ersten Umlaufrädergetriebestufe 58a zwölf Zähne und jedes Planetenrad 62b der zweiten Umlaufrädergetriebestufe 58b sechs Zähne.

Das Verhältnis von 2:1 entspricht dem Intervall einer Oktave, wenn es auf ein Verhältnis von Schallfrequenzen bezogen ist.

Nachdem die von der ersten Umlaufrädergetriebestufe 58a emittierte Schallfrequenz maßgeblich durch die Zähnezahl der Planetenräder 62a der ersten Umlaufrädergetriebestufe 58a bestimmt wird und die von der zweiten Umlaufrädergetriebestufe 58b emittierte Schallfrequenz durch die Zähnezahl der Planetenräder 62b der zweiten Umlaufrädergetriebestufe 58b, emittiert die Spindelantriebsbaugruppe 12 im Betrieb also Schallfrequenzen, die eine Oktave bilden. Dies wird von Fahrzeugnutzern als besonders angenehm empfunden.

Zudem assoziiert ein Fahrzeugnutzer mit solchen angenehmen Geräuschen ein hohes Qualitätsniveau der Spindelantriebsbaugruppe 12.

Alternativ kann das Verhältnis der Zähnezahlen jedes der Planetenräder 62a der ersten Umlaufrädergetriebestufe und der Zähnezahl jedes der Planetenräder 62b der zweiten Umlaufrädergetriebestufe auch zu 3:2, 4:3, 5:4 oder 6:5 gewählt werden.

Die emittierten Schallfrequenzen bilden dann eine Quinte, eine Quarte, eine große Terz bzw. eine kleine Terz. Auch diese Intervalle werden von Menschen als angenehm empfunden.

Allgemein gesprochen, wird das Verhältnis der Zähnezahl eines jeden Planetenrades 62a der ersten Umlaufrädergetriebestufe 58a und der Zähnezahl eines jeden Planetenrades 62b der zweiten Umlaufrädergetriebestufe 58b derart gewählt, dass im Betrieb eine erste Schallfrequenz, die von der ersten Umlaufrädergetriebestufe 58a emittiert wird, um ein ganzzahliges Vielfaches eines Halbtons gegenüber einer zweiten Schallfrequenz, die von der zweiten Umlaufrädergetriebestufe 58b emittiert wird, abweicht.

Die bevorzugte Ausführungsform der Oktave umfasst dabei zwölf Halbtonschritte, die der Quinte sieben, die der Quarte fünf, die der großen Terz vier und die der kleinen Terz drei.

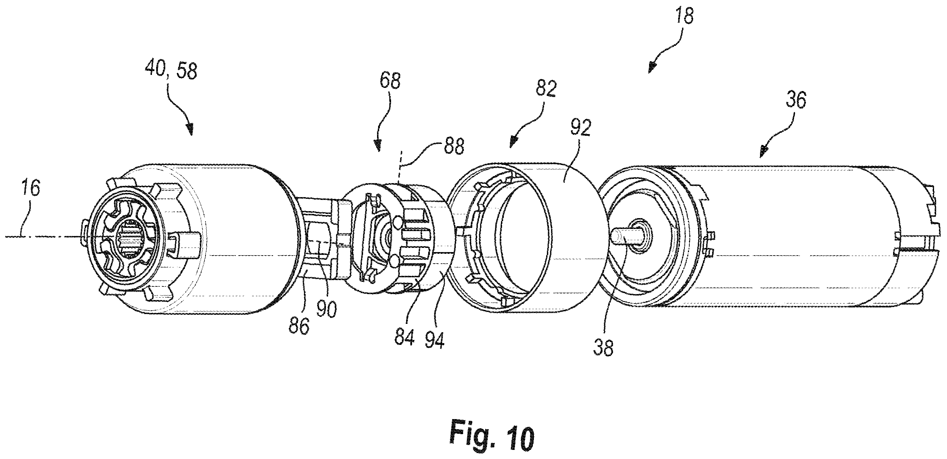

Die Kopplung des Spindelantriebsmotors 36 mit dem Getriebe 40, genauer gesagt mit dem zweistufigen Umlaufrädergetriebe 58, ist in Figur 10 im Detail dargestellt. Dabei sind dem Spindelantriebsmotor 36 und dem Getriebe 40 die einen Achsversatz ausgleichende Kupplung 68 und eine Hysteresebremse 82 antriebsmäßig zwischengeschaltet.

Wie bereits erwähnt, ist die Kupplung 68 eine Oldhamkupplung und umfasst ein antriebsmotorseitiges Kupplungsteil 84 sowie das getriebeseitige Kupplungsteil 69 (siehe Figur 8).

Die beiden Kupplungsteile 69, 84 sind über ein Kupplungszwischenteil 86 derart miteinander verbunden, dass die Motorwelle 38 und die Getriebeeingangswelle 70 drehfest miteinander verbunden sind.

Gleichzeitig ist das Kupplungszwischenteil 86 im montierten Zustand entlang einer Richtung 88 gegenüber dem antriebsmotorseitigen Kupplungsteil 84 verschiebbar.

Das getriebeseitige Kupplungsteil 69 ist gegenüber dem Kupplungszwischenteil 86 entlang einer Richtung 90 verschiebbar.

Die Richtung 88 und die Richtung 90 stehen dabei im Wesentlichen rechtwinklig aufeinander. Damit kann ein Achsversatz zwischen der Motorwelle 38 und der Getriebeeingangswelle 70 gemäß des Funktionsprinzips der Oldhamkupplung ausgeglichen werden.

Die Hysteresebremse 82 umfasst ein feststehendes Hysteresebremsenbauteil 92, das am Spindelantriebsbaugruppengehäuse 14 und/oder am Umlaufrädergetriebegehäuse 74 befestigt ist.

Zudem verfügt die Hysteresebremse 82 über ein mit der Motorwelle 38 drehgekoppeltes, drehbares Hysteresebremsenbauteil 94.

Dieses ist am antriebsmotorseitigen Kupplungsteil 84 befestigt oder in dieses integriert. Insbesondere ist das drehbare Hysteresebremsenbauteil 94 in das antriebsmotorseitige Kupplungsteil 84 eingespritzt.

Betrachtet man die Spindelantriebsbaugruppe 12 senkrecht zur Spindelantriebsachse 16, ist die Kupplung 68 in axialer Richtung im Wesentlichen vollständig innerhalb der Hysteresebremse 82, insbesondere innerhalb des feststehenden Hysteresebremsenbauteils 92 angeordnet. Der Aufbau der Kupplung 68 und der Hysteresebremse 82 ist also besonders kompakt.

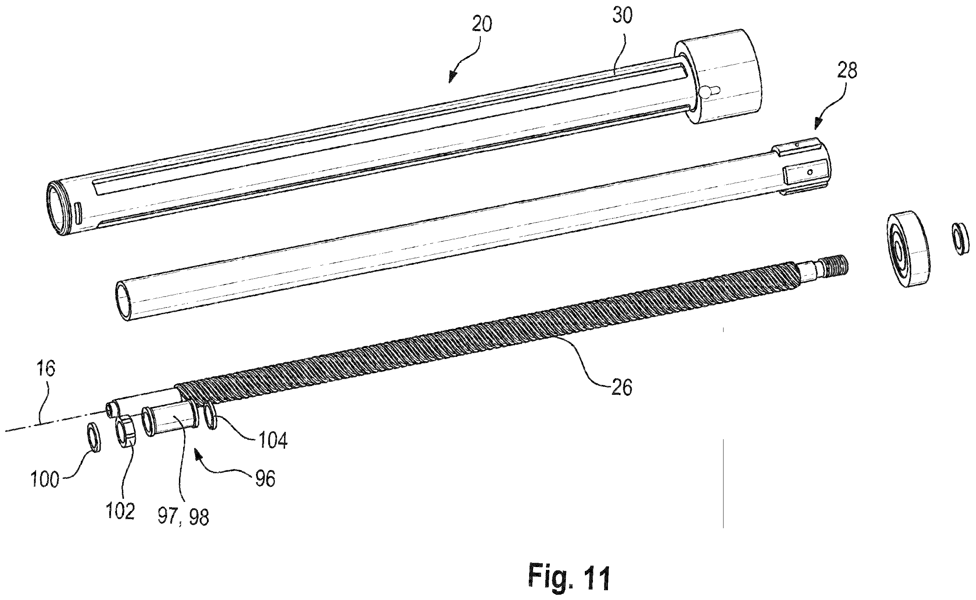

Die Figuren 11 - 14 zeigen die Spindeleinheit 20 im Detail.

Dabei ist an einem axialen Ende der Spindel 26 eine Anschlagsbaugruppe 96 angeordnet, die dazu ausgebildet ist, eine Beweglichkeit der Spindelmutter 28 entlang der Spindelantriebsachse 16 zu begrenzen. Konkret wird die Spindelmutter 28 so daran gehindert, sich über das Ende der Spindel 26 hinaus zu bewegen.

Die Anschlagsbaugruppe 96 umfasst ein plastisch verformbares Energieabsorptionsbauteil 97, das in der dargestellten Ausführungsform als Energieabsorptionshülse 98 ausgeführt ist, die im Wesentlichen koaxial die Spindel 26 umgibt.

Die Energieabsorptionshülse 98 ist also an der Spindel 26 gelagert.

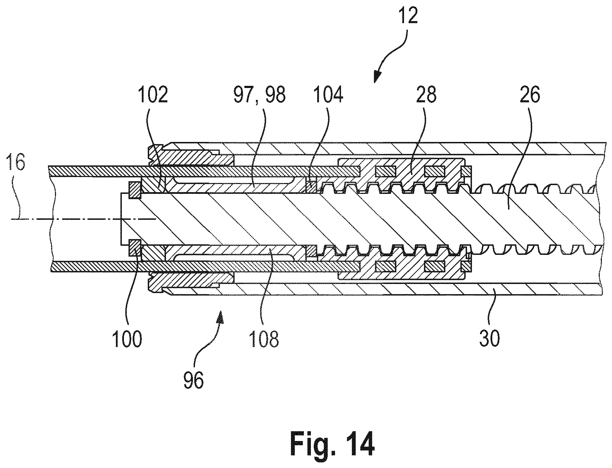

Die Energieabsorptionshülse 98 ist entlang der Spindelantriebsachse 16 zwischen einer spindelendseitigen Lagerscheibe 100 und der Spindelmutter 28 angeordnet (siehe insbesondere Figur 14).

Darüber hinaus ist zwischen der Energieabsorptionshülse 98 und der Lagerscheibe 100 ein Lagerelement 102 zur Lagerung der Spindel 26 am Spindelantriebsbaugruppengehäuse 14 vorgesehen.

Zwischen der Energieabsorptionshülse 98 und der Spindelmutter 28 ist darüber hinaus eine axial auf der Spindel 26 verschiebbare Anlaufscheibe 104 angeordnet.

Sowohl die Lagerscheibe 100 als auch die Anlaufscheibe 104 sind in der dargestellten Ausführungsform aus einem Metallwerkstoff hergestellt.

Die Energieabsorptionshülse 98 weist an ihren beiden axialen Enden jeweils einen als Krafteinleitungskragen ausgebildeten Kragen 106a, 106b auf.

Zwischen den Krägen 106a, 106b liegt ein in Richtung der Spindelantriebsachse 16 strauchbarer Verformungsabschnitt 108.

In der dargestellten Ausführungsform weist der Verformungsabschnitt lediglich einen einzigen Verformungsbereich auf. In alternativen Ausführungsformen kann er jedoch mehrere, insbesondere zwei Verformungsbereiche umfassen, wobei beide Verformungsbereiche in Richtung der Spindelantriebsachse 16 stauchbar sind.

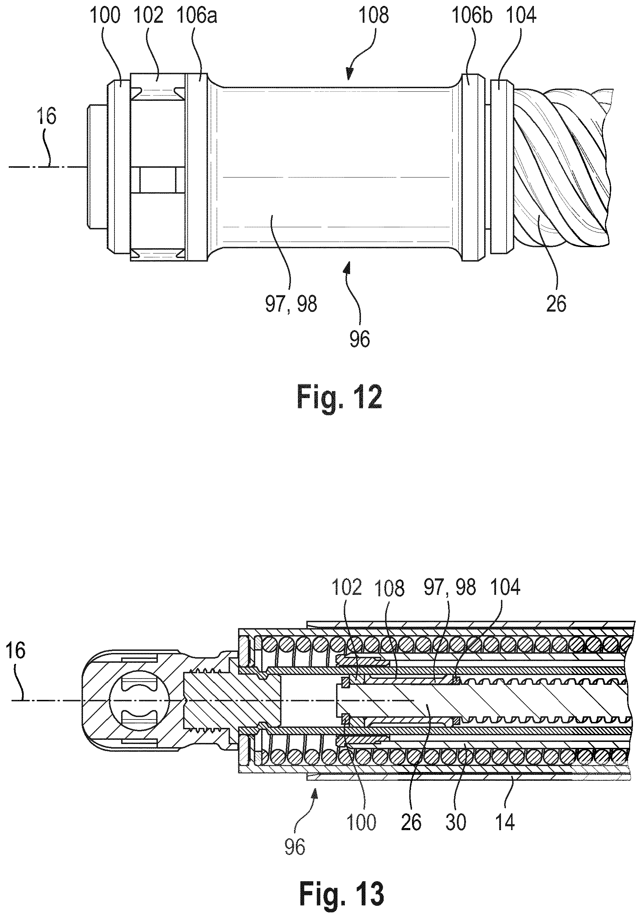

In einem Regulärbetrieb der Spindelantriebsbaugruppe 12 ist die Energieabsorptionshülse 98 im wesentlichen plastisch unverformt (siehe insbesondere die Figuren 12 bis 14). Dabei treten im Regulärbetrieb vorzugsweise Belastungen der Energieabsorptionshülse 98 auf, die ausschließlich Kräfte von weniger als 750 N umfassen.

Eine Belastung der Energieabsorptionshülse 98 mit einer Kraft von im Wesentlichen über 3000 N stellt für die dargestellte Ausführungsform ein Überlastereignis dar. Dadurch wird die Energieabsorptionshülse 98 plastisch verformt.

Ein solches Überlastereignis tritt auf, wenn die Spindelmutter 28 mit zu hoher Geschwindigkeit und/oder einer zu großen Kraft auf die Anschlagsbaugruppe 96, genauer gesagt die Energieabsorptionshülse 98 aufläuft.

Das kann beispielsweise bei einem Defekt der Hysteresebremse 82 passieren.

Auch kann ein Überlastereignis bei der Montage der Fahrzeugklappe 10 auftreten, wenn zwar die Spindelantriebsbaugruppe 12 schon mit der Fahrzeugklappe 10 verbunden ist, jedoch noch weitere Komponenten der Fahrzeugklappe 10 fehlen. Die Fahrzeugklappe 10 ist dann deutlich leichter als im Betrieb eines zugehörigen Fahrzeugs, für den die Spindelantriebsbaugruppe 12 ausgelegt ist. In diesem Zusammenhang kann die Spindelantriebsbaugruppe 12 mittels einer nicht näher bezeichneten Feder in eine Öffnungsstellung überführt werden. Aufgrund des verhältnismäßig geringen Gewichts der Fahrzeugklappe läuft die Spindelmutter 28 dann zu schnell an der Anschlagsbaugruppe 96 an.

Bei allen Überlastereignissen nimmt die Energieabsorptionshülse 98 die aus der überhöhten Geschwindigkeit und/oder der überhöhten Kraft resultierende Energie auf und schützt so die übrigen Komponenten der Spindelantriebsbaugruppe 12 vor Schäden.

In Figur 14 ist die Spindelmutter 28 an der Energieabsorptionshülse 98 anliegend dargestellt. Allerdings ist diese aus Gründen der besseren Übersichtlichkeit in ihrem plastisch unverformten Zustand gezeigt.

Bei einem nachfolgenden Betrieb der Spindelantriebsbaugruppe 12, in dem weiterhin das Öffnen und Schließen der Fahrzeugklappe 10 problemlos möglich ist, spricht man auch von einem Überlastfolgebetrieb. In diesem Betriebszustand ist die Energieabsorptionshülse 98 plastisch verformt (nicht dargestellt).

Für den Fall, dass die Energieabsorptionshülse 98 mehrere Verformungsbereiche umfasst, ist im Überlastfolgebetrieb nur einer der Verformungsbereiche plastisch verformt.

Tritt nachfolgend ein zweites Überlastereignis auf und umfasst die Energieabsorptionshülse 98 einen zweiten Verformungsbereich, so verformt sich dieser aufgrund des zweiten Überlastereignisses plastisch. Nachfolgend tritt die Spindelantriebsbaugruppe 12 in einen sekundären Überlastfolgebetrieb ein, in dem weiterhin das Öffnen und Schließen der Fahrzeugklappe 10 mittels der Spindelantriebsbaugruppe 12 gewährleistet ist.

## Patentansprüche

1. Spindelantriebsbaugruppe (12) zum Öffnen und/oder Schließen einer Fahrzeugklappe (10), mit einem sich entlang einer Spindelantriebsachse (16) erstreckenden Spindelantriebsbaugruppengehäuse (14) und einem im Spindelantriebsbaugruppengehäuse (14) angeordneten Spindelantriebsmotor (36), dessen Motorwelle (38) im Wesentlichen koaxial zur Spindelantriebsachse (16) angeordnet ist, wobei der Spindelantriebsmotor (36) bezüglich der Spindelantriebsachse (16) über einen Formschluss rotationsfest im Spindelantriebsbaugruppengehäuse (14) gelagert ist, wobei der Spindelantriebsmotor (36) über ein Motorgehäuse (42) im Spindelantriebsbaugruppengehäuse (14) gelagert ist, wobei das Spindelantriebsbaugruppengehäuse (14) eine Gehäusekappe (14c) umfasst und der Spindelantriebsmotor (36) rotationsfest an der Gehäusekappe (14c) gelagert ist, und wobei der Spindelantriebsmotor (36) über mindestens ein Dämpfungselement (24b) an der Gehäusekappe (14) rotationsfest gelagert ist.

2. Spindelantriebsbaugruppe (12) nach Anspruch 1, **dadurch gekennzeichnet, dass** die Gehäusekappe (14c) das Spindelantriebsbaugruppengehäuse (14) axial endseitig abschließt.

3. Spindelantriebsbaugruppe (12) nach Anspruch 1 oder 2, **dadurch gekennzeichnet, dass** am Motorgehäuse (42) mindestens zwei Antirotationsvorsprünge (44a, 44b) vorgesehen sind, die sich im montierten Zustand des Spindelantriebsmotors (36) im Wesentlichen entlang der Spindelantriebsachse (16) erstrecken und in zugeordnete, am Spindelantriebsbaugruppengehäuse (14) vorgesehene Vertiefungen (50a, 50b) eingreifen.

4. Spindelantriebsbaugruppe (12) nach Anspruch 3, **dadurch gekennzeichnet, dass** die Antirotationsvorsprünge (44a, 44b) kreiszylinderförmig sind, wobei im montierten Zustand des Spindelantriebsmotors (36) zugeordnete Kreiszylindermittelachsen (46a, 46b) im Wesentlichen parallel zur Spindelantriebsachse (16) verlaufen.

5. Spindelantriebsbaugruppe (12) nach Anspruch 3 oder 4, **dadurch gekennzeichnet, dass** die Antirotationsvorsprünge (44a, 44b) über elastische, auf den Antirotationsvorsprüngen (44a, 44b) angeordnete Dämpfungskappen oder über elastische, in den Vertiefungen (50a, 50b) angeordnete Dämpfungselemente in die Vertiefungen (50a, 50b) eingreifen.

6. Spindelantriebsbaugruppe (12) nach einem der Ansprüche 3 bis 5, **dadurch gekennzeichnet, dass** die Antirotationsvorsprünge (44a, 44b) an einer axialen Endseite (48) des Spindelantriebsmotors (36) vorgesehen sind, die der Motorwelle (38) abgewandt ist.

7. Spindelantriebsbaugruppe (12) nach einem der vorhergehenden Ansprüche, **dadurch gekennzeichnet, dass** ein erster elektrischer Leistungsanschluss (52) des Spindelantriebsmotors (36) und/oder ein zweiter elektrischer Leistungsanschluss (54) des Spindelantriebsmotors (36) und/oder ein Sensoranschluss (56) des Spindelantriebsmotors (36) an einer axialen Endseite (48) des Spindelantriebsmotors (36) vorgesehen sind, die der Motorwelle (38) abgewandt ist.

8. Spindelantriebsbaugruppe (12) zum Öffnen und/oder Schließen einer Fahrzeugklappe (10), mit einem sich entlang einer Spindelantriebsachse (16) erstreckenden Spindelantriebsbaugruppengehäuse (14) und einem im Spindelantriebsbaugruppengehäuse (14) angeordneten Spindelantriebsmotor (36), dessen Motorwelle (38) im Wesentlichen koaxial zur Spindelantriebsachse (16) angeordnet ist, wobei der Spindelantriebsmotor (36) bezüglich der Spindelantriebsachse (16) über einen Formschluss rotationsfest im Spindelantriebsbaugruppengehäuse (14) gelagert ist, wobei und das Spindelantriebsbaugruppengehäuse (14) eine Gehäusekappe (14c) umfasst und der Spindelantriebsmotor (36) über ein Motorgehäuse (42) rotationsfest an der Gehäusekappe (14c) gelagert ist, und wobei am Motorgehäuse (42) mindestens zwei Antirotationsvorsprünge (44a, 44b) vorgesehen sind, die sich im montierten Zustand des Spindelantriebsmotors (36) im Wesentlichen entlang der Spindelantriebsachse (16) erstrecken und in zugeordnete, an der Gehäusekappe (14) vorgesehene Vertiefungen (50a, 50b) eingreifen.

9. Fahrzeugklappe (10), insbesondere Fahrzeugheckklappe oder Fahrzeugkofferraumdeckel, mit einer Spindelantriebsbaugruppe (12) nach einem der vorhergehenden Ansprüche.

## Claims

1. A spindle drive assembly (12) for opening and/or closing a vehicle flap (10), comprising a spindle drive assembly housing (14) extending along a spindle drive axis (16) and a spindle drive motor (36) which is arranged in the spindle drive assembly housing (14) and the motor shaft (38) of which is arranged substantially coaxially with the spindle drive axis (16), wherein the spindle drive motor (36) is supported in the spindle drive assembly housing (14) in a rotationally fixed manner in relation to the spindle drive axis (16) by means of an interlocking fit, wherein the spindle drive motor (36) is supported in the spindle drive assembly housing (14) by means of a motor housing (42), wherein the spindle drive assembly housing (14) comprises a housing cap (14c) and the spindle drive motor (36) is supported at the housing cap (14c) in a rotationally fixed manner, and wherein the spindle drive motor (36) is supported at the housing cap (14) in a rotationally fixed manner by means of at least one damping element (24b).

2. The spindle drive assembly (12) according to claim 1, **characterized in that** the housing cap (14c) closes the spindle drive assembly housing (14) axially on an end side.

3. The spindle drive assembly (12) according to claim 1 or 2, **characterized in that** the motor housing (42) has at least two anti-rotation projections (44a, 44b) provided thereon which, in the mounted state of the spindle drive motor (36), extend substantially along the spindle drive axis (16) and engage in associated recesses (50a, 50b) provided on the spindle drive assembly housing (14).

4. The spindle drive assembly (12) according to claim 3, **characterized in that** the anti-rotation projections (44a, 44b) are circular cylindrical, with associated circular cylinder center axes (46a, 46b) extending substantially parallel to the spindle drive axis (16) in the mounted state of the spindle drive motor (36).

5. The spindle drive assembly (12) according to claim 3 or 4, **characterized in that** the anti-rotation projections (44a, 44b) engage in the recesses (50a, 50b) via elastic damping caps arranged on the anti-rotation projections (44a, 44b) or via elastic damping elements arranged in the recesses (50a, 50b).

6. The spindle drive assembly (12) according to any of claims 3 to 5, **characterized in that** the anti-rotation projections (44a, 44b) are provided on an axial end side (48) of the spindle drive motor (36) facing away from the motor shaft (38).

7. The spindle drive assembly (12) according to any of the preceding claims, **characterized in that** a first electrical power connection (52) of the spindle drive motor (36) and/or a second electrical power connection (54) of the spindle drive motor (36) and/or a sensor connection (56) of the spindle drive motor (36) are provided on an axial end side (48) of the spindle drive motor (36) facing away from the motor shaft (38).

8. A spindle drive assembly (12) for opening and/or closing a vehicle flap (10), comprising a spindle drive assembly housing (14) extending along a spindle drive axis (16) and a spindle drive motor (36) which is arranged in the spindle drive assembly housing (14) and the motor shaft (38) of which is arranged substantially coaxially with the spindle drive axis (16), wherein the spindle drive motor (36) is supported in the spindle drive assembly housing (14) in a rotationally fixed manner in relation to the spindle drive axis (16) by means of an interlocking fit, and wherein the spindle drive assembly housing (14) comprises a housing cap (14c) and the spindle drive motor (36) is supported at the housing cap (14c) in a rotationally fixed manner by means of a motor housing (42), and wherein the motor housing (42) has at least two anti-rotation projections (44a, 44b) provided thereon which, in the mounted state of the spindle drive motor (36), extend substantially along the spindle drive axis (16) and engage in associated recesses (50a, 50b) provided on the housing cap (14).

9. A vehicle flap (10), in particular a vehicle hatch or tailgate or vehicle trunk lid, comprising a spindle drive assembly (12) according to any of the preceding claims.

## Revendications

1. Ensemble d'entraînement de vis (12) pour l'ouverture et/ou la fermeture d'un ouvrant de véhicule (10), comprenant un boîtier d'ensemble d'entraînement de vis (14) qui s'étend le long d'un axe d'entraînement de vis (16), et un moteur d'entraînement de vis (36) qui est agencé dans le boîtier d'ensemble d'entraînement de vis (14) et dont l'arbre de moteur (38) est agencé de manière sensiblement coaxiale par rapport à l'axe d'entraînement de vis (16), le moteur d'entraînement de vis (36), par rapport à l'axe d'entraînement de vis (16), étant monté solidaire en rotation dans le boîtier d'ensemble d'entraînement de vis (14) par une coopération de formes, le moteur d'entraînement de vis (36) étant monté dans le boîtier d'ensemble d'entraînement de vis (14) par l'intermédiaire d'un boîtier de moteur (42), le boîtier d'ensemble d'entraînement de vis (14) comprenant un capuchon de boîtier (14c) et le moteur d'entraînement de vis (36) étant monté solidaire en rotation sur le capuchon de boîtier (14c), et le moteur d'entraînement de vis (36) étant monté solidaire en rotation sur le capuchon de boîtier (14) par l'intermédiaire d'au moins un élément d'amortissement (24b).

2. Ensemble d'entraînement de vis (12) selon la revendication 1, **caractérisé en ce que** le capuchon de boîtier (14c) ferme le boîtier d'ensemble d'entraînement de vis (14) axialement d'un côté d'extrémité.

3. Ensemble d'entraînement de vis (12) selon la revendication 1 ou 2, **caractérisé en ce qu'**il est prévu sur le boîtier de moteur (42) au moins deux saillies anti-rotation (44a, 44b) lesquelles, à l'état monté du moteur d'entraînement de vis (36), s'étendent sensiblement le long de l'axe d'entraînement de vis (16) et s'engagent dans des évidements associés (50a, 50b) prévus sur le boîtier d'ensemble d'entraînement de vis (14).

4. Ensemble d'entraînement de vis (12) selon la revendication 3, **caractérisé en ce que** les saillies anti-rotation (44a, 44b) ont une forme cylindrique circulaire, des axes médians associés (46a, 46b) de cylindre circulaire, à l'état monté du moteur d'entraînement de vis (36), s'étendant de manière sensiblement parallèle à l'axe d'entraînement de vis (16).

5. Ensemble d'entraînement de vis (12) selon la revendication 3 ou 4, **caractérisé en ce que** les saillies anti-rotation (44a, 44b) s'engagent dans les évidements (50a, 50b) par l'intermédiaire de capuchons d'amortissement élastiques agencés sur les saillies anti-rotation (44a, 44b) ou par l'intermédiaire d'éléments d'amortissement élastiques agencés dans les évidements (50a, 50b).

6. Ensemble d'entraînement de vis (12) selon l'une des revendications 3 à 5, **caractérisé en ce que** les saillies anti-rotation (44a, 44b) sont prévues d'un côté d'extrémité axial (48) du moteur d'entraînement de vis (36), qui est détourné de l'arbre de moteur (38).

7. Ensemble d'entraînement de vis (12) selon l'une des revendications précédentes, **caractérisé en ce que** d'un côté d'extrémité axial (48) du moteur d'entraînement de vis (36), qui est détourné de l'arbre de moteur (38), il est prévu un premier raccord de puissance électrique (52) du moteur d'entraînement de vis (36) et/ou un deuxième raccord de puissance électrique (54) du moteur d'entraînement de vis (36) et/ou un raccord de capteur (56) du moteur d'entraînement de vis (36).

8. Ensemble d'entraînement de vis (12) pour l'ouverture et/ou la fermeture d'un ouvrant de véhicule (10), comprenant un boîtier d'ensemble d'entraînement de vis (14) qui s'étend le long d'un axe d'entraînement de vis (16), et un moteur d'entraînement de vis (36) qui est agencé dans le boîtier d'ensemble d'entraînement de vis (14) et dont l'arbre de moteur (38) est agencé de manière sensiblement coaxiale par rapport à l'axe d'entraînement de vis (16), le moteur d'entraînement de vis (36), par rapport à l'axe d'entraînement de vis (16), étant monté solidaire en rotation dans le boîtier d'ensemble d'entraînement de vis (14) par une coopération de formes, et le boîtier d'ensemble d'entraînement de vis (14) comprenant un capuchon de boîtier (14c) et le moteur d'entraînement de vis (36) étant monté solidaire en rotation sur le capuchon de boîtier (14c) par l'intermédiaire d'un boîtier de moteur (42), et au moins deux saillies anti-rotation (44a, 44b) étant prévues sur le boîtier de moteur (42) lesquelles, à l'état monté du moteur d'entraînement de vis (36), s'étendent sensiblement le long de l'axe d'entraînement de vis (16) et s'engagent dans des évidements associés (50a, 50b) prévus sur le capuchon de boîtier (14).

9. Ouvrant de véhicule (10), en particulier hayon arrière de véhicule ou couvercle de coffre de véhicule, comprenant un ensemble d'entraînement de vis (12) selon l'une des revendications précédentes.
